# EUROPEAN PATENT APPLICATION

(11) **EP 2 455 728 A2**
(43) Date of publication of application: **23.05.2012**
(21) Application number: 11189438.2
(22) Date of filing: 16.11.2011
(51) Int. Cl.: G01H 1/00

(54) **Sensor assembly and methods of measuring the proximity of a component to an emitter**

(30) Priority: 22.11.2010 US 951394
(71) Applicant: General Electric Company, Schenectady, NY 12345 (US)
(72) Inventor: Sheikman, Boris Leonid, Minden, NY 89423 (US); Go, Steven YueHin, Niskayuna, NY 12309 (US); Lee, Yongjae, Niskayuna, NY 12309 (US)
(74) Representative: Bedford, Grant Richard

(57) **Abstract**

A sensor assembly (110) is provided and includes at least one probe (202) including an emitter (206) that generates at least one electromagnetic field (224) from at least one microwave signal including a plurality of frequency components within a predefined frequency range, wherein a loading is induced to the emitter when a component (104) interacts with the at least one electromagnetic field, a data conduit (204) coupled to the emitter, wherein at least one loading signal representative of the loading is reflected within the data conduit from the emitter; and at least one signal processing device (200) configured to receive the at least one loading signal and to generate an electrical output.

## Description

The field of the present invention relates generally to power systems and, more particularly, to a sensor assembly and methods of measuring the proximity of a component with respect to an emitter that operates over a wide range of frequencies.

At least some known machines, such as power generation systems, include one or more components that may become damaged or worn over time. For example, known power generation systems, such as known turbines, include components such as, bearings, gears, and/or rotor blades that wear over time. Continued operation with a worn component may cause additional damage to other components or may lead to a premature failure of the component or system.

To detect component damage within machines, the operation of at least some known machines is monitored with a monitoring system. At least some known monitoring systems include at least one sensor assembly that performs proximity measurements of at least some of the components of the machine. Proximity measurements can be performed using eddy current sensors, magnetic pickup sensors, or capacitive sensors. However, because the measuring range of such sensors is limited, the locations that such sensors may be used may be limited. Moreover, because the frequency response of such sensors is generally low, the accuracy of such sensors may be limited.

At least some known microwave emitters that operate over a single frequency have been used to resolve some of the known limitations of such sensors. However, when performing proximity measurements, such known microwave emitters may become detuned as they approach a target object. More specifically, the resonant frequency of the microwave emitter may be shifted. Such a shift may result in unpredictable behavior patterns in the scattering parameters (S-parameters) of the microwave emitter. Moreover, because the S-parameters may be irregular, the accuracy of the microwave emitter may be limited.

In one embodiment according to the present invention, a method for measuring a proximity of a component with respect to an emitter is provided. The method includes transmitting at least one microwave signal having a plurality of frequency components within a predefined frequency range to the emitter. At least one electromagnetic field is generated by the emitter from the microwave signal. A load is then induced to the emitter by an interaction between the component and the electromagnetic field, wherein at least one loading signal representative of the loading is reflected within a data conduit from the emitter. Moreover, the loading signal is received by at least one signal processing device. The proximity of the component with respect to the emitter is measured by the signal processing device based on the loading signal.

In another embodiment, a sensor assembly is provided. The sensor assembly includes at least one probe that includes an emitter. The emitter generates at least one electromagnetic field from at least one microwave signal having a plurality of frequency components within a predefined frequency range, wherein a loading is induced to the emitter when a component interacts with the electromagnetic field. The sensor assembly also includes a data conduit that is coupled to the emitter, wherein at least one loading signal representative of the loading is reflected within the data conduit from the emitter. Moreover, the sensor assembly includes at least one signal processing device that is configured to receive the loading signal and to generate an electrical output.

In another embodiment, a power system is provided. The power system includes a machine that includes at least one component, at least one sensor assembly that is positioned proximate to the component, and a diagnostic system that is coupled to the sensor assembly. The sensor assembly includes at least one probe that includes an emitter. The emitter generates at least one electromagnetic field from at least one microwave signal having a plurality of frequency components within a predefined frequency range, wherein a loading is induced to the emitter when the component interacts with the electromagnetic field. The sensor assembly also includes a data conduit that is coupled to the emitter, wherein at least one loading signal representative of the loading is reflected within the data conduit from the emitter. Moreover, the sensor assembly includes at least one signal processing device that is configured to receive the loading signal and to generate an electrical output.

Various aspects and embodiments of the present invention will now be described in connection with the accompanying drawings, in which:
Fig. 1 is a block diagram of an exemplary power system;
Fig. 2 is a block diagram of an exemplary sensor assembly that may be used with the power system shown in Fig. 1;
Fig. 3 is a perspective view of an exemplary emitter that may be used with the sensor assembly shown in Fig. 2;
Fig. 4 is a perspective view of an exemplary emitter that may be used with the sensor assembly shown in Fig. 2; and
Fig. 5 is a flow chart illustrating an exemplary a method for measuring a proximity of a component with respect to an emitter that may be used with the power system shown in Fig. 1.

The exemplary methods, apparatus, and systems described herein overcome at least some known disadvantages associated with known sensor assemblies or systems that are used for measuring the proximity of a machine component with respect to an emitter. The embodiments described herein provide a sensor assembly that includes an emitter that operates over a wide range of frequencies, such as a broadband emitter. More specifically, in the exemplary embodiment, the emitter has a substantially flat standing wave ratio that enables the emitter to have steady behavior patterns in the S-parameters of the emitter. As a result, even if the resonant frequency of the emitter shifts, the S-parameters of the emitter maintain a regular pattern that may be used for correlating to a relevant distance. As such, the sensor assembly herein is enabled to provide substantially accurate measurements.

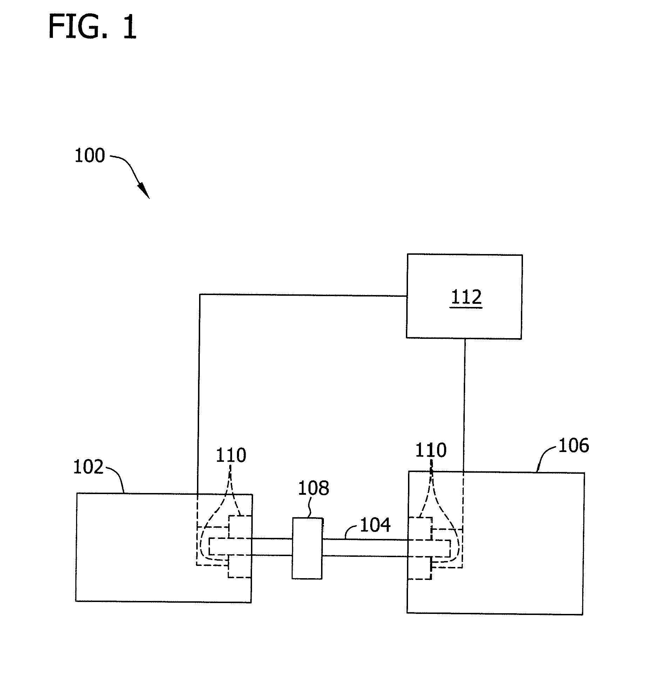

Fig. 1 illustrates a system 100, such as but not limited to an exemplary power system 100 that includes a machine 102, such as, but not limited to a wind turbine, a hydroelectric turbine, a gas turbine, and/or a compressor. In the exemplary embodiment, machine 102 rotates a drive shaft 104 coupled to a load 106, such as a generator. It should be noted that, as used herein, the term "couple" is not limited to a direct mechanical and/or an electrical connection between components, but may also include an indirect mechanical and/or electrical connection between multiple components.

In the exemplary embodiment, drive shaft 104 is at least partially supported by one or more bearings (not shown) housed within machine 102 and/or within load 106. Alternatively or additionally, the bearings may be housed within a separate support structure 108, such as a gearbox, or any other structure that enables power system 100 to function as described herein.

In the exemplary embodiment, power system 100 includes at least one sensor assembly 110 that measures and/or monitors at least one operating condition of machine 102, drive shaft 104, load 106, and/or of any other component that enables system 100 to function as described herein. More specifically, in the exemplary embodiment, sensor assembly 110 is a proximity sensor assembly 110 that is positioned in close proximity to drive shaft 104 for use in measuring and/or monitoring a distance (not shown in Fig. 1) between drive shaft 104 and sensor assembly 110. Moreover, in the exemplary embodiment, sensor assembly 110 uses one or more microwave signals having a plurality of frequency components to measure a proximity of a component of power system 100 with respect to sensor assembly 110. As used herein, the term "microwave" refers to a signal or a component that receives and/or transmits signals having frequencies between about 300 Megahertz (MHz) and to about 300 Gigahertz (GHz). Alternatively, sensor assembly 110 may be used to measure and/or monitor any other component of power system 100, and/or may be any other sensor or transducer assembly that enables power system 100 to function as described herein.

In the exemplary embodiment, each sensor assembly 110 is positioned in any relative location within power system 100. Moreover, in the exemplary embodiment, power system 100 includes a diagnostic system 112 that is coupled to one or more sensor assemblies 110. Diagnostic system 112 processes and/or analyzes one or more signals generated by sensor assemblies 110. As used herein, the term "process" refers to performing an operation on, adjusting, filtering, buffering, and/or altering at least one characteristic of a signal. More specifically, in the exemplary embodiment, sensor assemblies 110 are coupled to diagnostic system 112 via a data conduit 113 or a data conduit 115. Alternatively, sensor assemblies 110 may be wirelessly coupled to diagnostic system 112.

During operation, in the exemplary embodiment, because of wear, damage, or vibration, for example, one or more components of power system 100, such as drive shaft 104, may change positions with respect to one or more sensor assemblies 110. For example, vibrations may be induced to the components and/or the components may expand or contract as the operating temperature within power system 100 changes. In the exemplary embodiment, sensor assemblies 110 measure and/or monitor the proximity, such as the static and/or vibration proximity, and/or the relative position of the components with respect to sensor assembly 110 and transmit a signal representative of the measured proximity and/or relative position of the components (hereinafter referred to as a "proximity measurement signal") to diagnostic system 112 for processing and/or analysis.

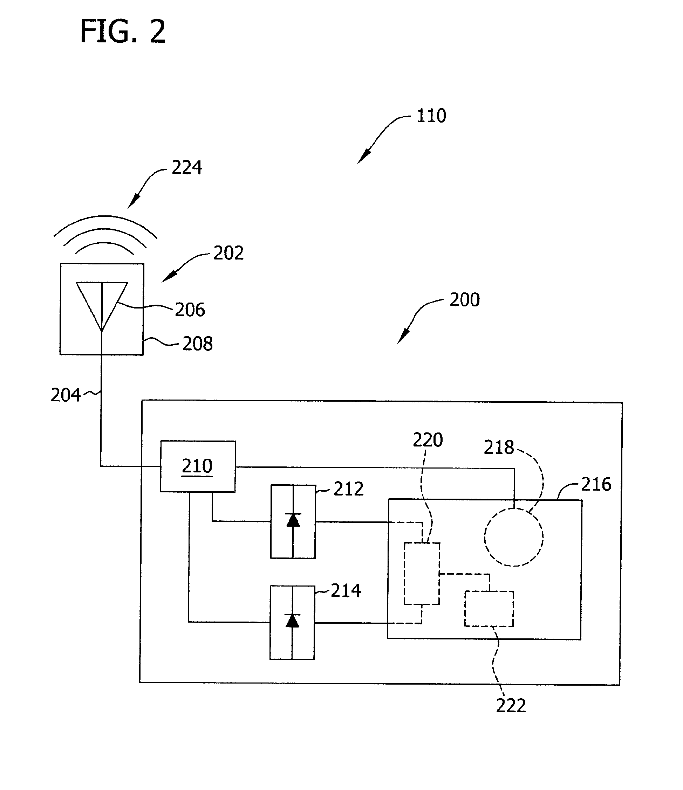

Fig. 2 is a schematic diagram of sensor assembly 110 that may be used with power system 100 (shown in Fig. 1). In the exemplary embodiment, sensor assembly 110 includes a signal processing device 200 and a probe 202 that is coupled to signal processing device 200 via a data conduit 204. Alternatively, probe 202 may be wirelessly coupled to signal processing device 200.

Moreover, in the exemplary embodiment, probe 202 includes an emitter 206 that is coupled to and/or positioned within a probe housing 208 and generates an electromagnetic field 224. Emitter 206 is coupled to signal processing device 200 via data conduit 204. Alternatively, emitter 206 may be wirelessly coupled to signal processing device 200. Moreover, in the exemplary embodiment, probe 202 is a microwave probe 202 that includes a broadband emitter 206. More specifically, in the exemplary embodiment, emitter 206 is configured to generate at least one electromagnetic field 224 from at least one microwave signal having a plurality of frequency components within a predefined frequency range.

Moreover, in the exemplary embodiment, signal processing device 200 includes a directional coupling device 210 that is coupled to a transmission power detector 212, to a reception power detector 214, and to a signal conditioning device 216. Furthermore, in the exemplary embodiment, signal conditioning device 216 includes a signal generator 218, a subtractor 220, and a linearizer 222.

During operation, in the exemplary embodiment, signal generator 218 generates at least one electrical signal that has a plurality of microwave frequency components (hereinafter referred to as a "microwave signal"), wherein the microwave signal is within the range of resonant operation. The range is dictated by the size of emitter 206. Signal generator 218 transmits the microwave signal to directional coupling device 210. Directional coupling device 210 transmits the microwave signal to transmission power detector 212 and to emitter 206. As the microwave signal is transmitted through emitter 206, electromagnetic field 224 is emitted from emitter 206 and out of probe housing 208. If an object, such as a drive shaft 104 (shown in Fig. 1) or another component of machine 102 (shown in Fig. 1) and/or of power system 100 enters and/or changes a relative position within electromagnetic field 224, an electromagnetic coupling may occur between the object and field 224. More specifically, because of the presence of the object within electromagnetic field 224 and/or because of such object movement, electromagnetic field 224 is disrupted because of an induction and/or capacitive effect within the object that may cause at least a portion of electromagnetic field 224 to be inductively and/or capacitively coupled to the object as an electrical current and/or charge. In such an instance, emitter 206 is detuned (i.e., a resonant response of emitter 206 shifts and/or changes, etc.) and a loading is induced to emitter 206. The loading induced to emitter 206 causes a reflection of the microwave signal (hereinafter referred to as a "detuned loading signal") to be transmitted through data conduit 204 to directional coupling device 210. In the exemplary embodiment, the detuned loading signal has a lower power amplitude and/or a different phase than the power amplitude and/or the phase of the microwave signal. Moreover, in the exemplary embodiment, the power amplitude of the detuned loading signal is dependent upon the proximity of the object to emitter 206. Directional coupling device 210 transmits the detuned loading signal to reception power detector 214.

In the exemplary embodiment, reception power detector 214 measures an amount of power contained in the distortion signal and transmits a signal representative of the measured detuned loading signal power to signal conditioning device 216. Moreover, transmission power detector 212 detects an amount of power contained in the microwave signal and transmits a signal representative of the measured microwave signal power to signal conditioning device 216. In the exemplary embodiment, subtractor 220 receives the measured microwave signal power and the measured detuned loading signal power, and calculates a difference between the microwave signal power and the detuned loading signal power. Subtractor 220 transmits a signal representative of the calculated difference (hereinafter referred to as a "power difference signal") to linearizer 222. In the exemplary embodiment, an amplitude of the power difference signal is substantially proportional, such as inversely proportional or exponentially proportional, to a distance 230 defined between the object, such as shaft 104, (i.e., the object proximity) within electromagnetic field 224 and emitter 206.

Depending on a geometry or another characteristic of emitter 206, however, the amplitude of the power difference signal may at least partially exhibit a non-linear relationship with respect to the object proximity. Moreover, in the exemplary embodiment, emitter 206 has a substantially flat standing wave ratio. As such, when the resonant frequency shifts as a result of emitter 206 being detuned, the detuned loading signal remains substantially proportional or exponentially proportional to distance 230 over the broad range of frequencies.

In the exemplary embodiment, linearizer 222 transforms the power difference signal into an electrical output, such as a voltage output signal (i.e., the "proximity measurement signal") that exhibits a substantially linear relationship between the object proximity and the amplitude of the proximity measurement signal. Moreover, in the exemplary embodiment, linearizer 222 transmits the proximity measurement signal to diagnostic system 112 (shown in Fig. 1) with a scale factor enabled for processing and/or analysis within diagnostic system 112. Linearizer 222 can utilize and drive emitter 206 with either analog or digital signal processing techniques as well as using a hybrid mix of the two. For example, in the exemplary embodiment, the proximity measurement signal has a scale factor of Volts per millimeter. Alternatively, the proximity measurement signal may have any other scale factor that enables diagnostic system 112 and/or power system 100 to function as described herein.

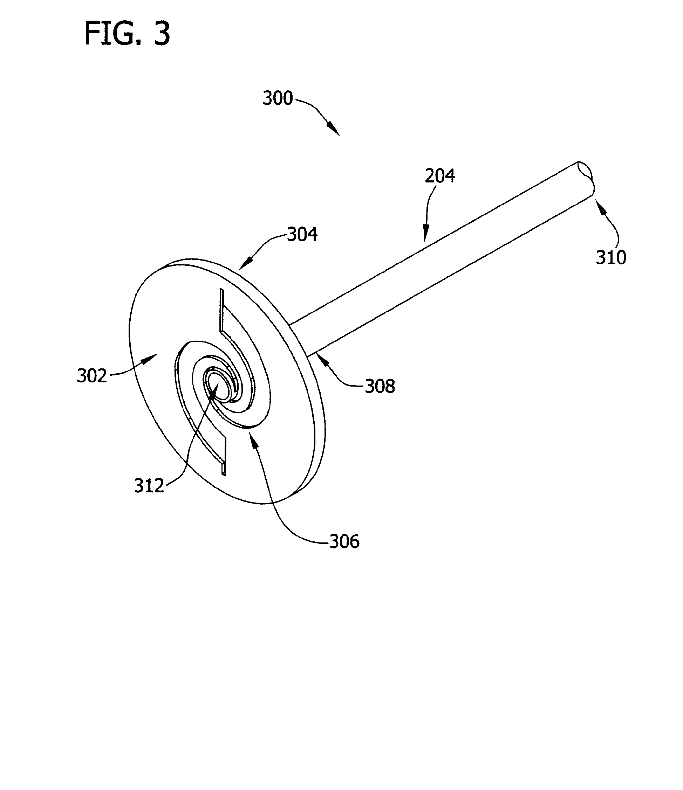

Fig. 3 is a perspective view of an emitter 300 that may be used with sensor assembly 110 (shown in Figs. 1 and 2). More specifically, emitter 300 is a specific type of broadband emitter that may be used as the broadband emitter 206 (shown in Fig. 2). In the exemplary embodiment, emitter 300 is a logarithmic spiral emitter 300 that has a broad frequency range defined by the shape and/or dimensions of emitter 300. More specifically, in the exemplary embodiment, emitter 300 may receive and/or transmit signals having frequencies between about 2 GHz to about 800 MHz.

In the exemplary embodiment, emitter 300 is manufactured with a printed circuit board 301 and is formed with a substantially two-dimensional planar shape. More specifically, emitter 300 is formed with a substantially circular cross-sectional shape defined by a first surface 302 and a second surface 304. First surface includes a conduit 306 that, in the exemplary embodiment, has a substantially spiral shape and is formed from a metallic wire. A signal, such as the microwave signal, can be transmitted through conduit 306, and more specifically, transmitted via a desired spiral length 307. Alternatively, conduit 306 may be fabricated from any other substance or compound that is sized to receive conduit 306 and that enables emitter 300 to function as described herein.

Second surface 304 of emitter 300 is coupled to signal processing device 200 (shown in Fig. 2) via data conduit 204. Specifically, data conduit 204 has a first end 308 and a second end 310. First end 308 is coupled to emitter second surface 304 and, in the exemplary embodiment, second end 310 is coupled to signal processing device 200. In the exemplary embodiment, emitter second surface 304 includes a connecting device 312 that extends from second surface 304 to first surface 302. Data conduit 204 is coupled to second surface 304 via connecting device 312.

During operation, signal generator 218 (shown in Fig. 2) generates a microwave signal having a plurality of frequency components and transmits the microwave signal to directional coupling device 210 (shown in Fig. 2). Directional coupling device 210 (shown in Fig. 2) transmits the microwave signal to transmission power detector 212 (shown in Fig. 2) and to emitter 300. As the microwave signal is transmitted through emitter 300, an electromagnetic field 224 (shown in Fig. 2) is emitted from emitter 300 and out of probe housing 208 (shown in Fig. 2). More specifically, the microwave signal is transmitted through conduit 306. If an object, such as a drive shaft 104 (shown in Fig. 1) or another component of machine 102 (shown in Fig. 1) and/or of power system 100 (shown in Fig. 1) enters and/or changes a relative position within electromagnetic field 224, an electromagnetic coupling may occur between the object and field 224. More specifically, because of the presence of the object within electromagnetic field 224 and/or because of such object movement, electromagnetic field 224 is disrupted because of an induction and/or capacitive effect within the object that may cause at least a portion of electromagnetic field 224 to be inductively and/or capacitively coupled to the object as an electrical current and/or charge. In such an instance, emitter 300 is detuned (i.e., a resonant frequency of emitter 206 is reduced and/or changed, etc.) and a loading is induced to emitter 300. The loading induced to emitter 300 causes a detuned loading signal to be transmitted through data conduit 204 (shown in Fig. 2) to directional coupling device 210. In the exemplary embodiment, the detuned loading signal has a lower power amplitude and/or a different phase than the power amplitude and/or the phase of the microwave signal. Moreover, in the exemplary embodiment, the power amplitude of the detuned loading signal is dependent upon the proximity of the object, such as shaft 104, to emitter 300. Directional coupling device 210 transmits the detuned loading signal to reception power detector 214 (shown in Fig. 2).

Moreover, reception power detector 214 measures an amount of power contained in the distortion signal and transmits a signal representative of the measured detuned loading signal power to signal conditioning device 216 (shown in Fig. 2). Moreover, transmission power detector 212 detects an amount of power contained in the microwave signal and transmits a signal representative of the measured microwave signal power to signal conditioning device 216. In the exemplary embodiment, subtractor 220 (shown in Fig. 2) receives the measured microwave signal power and the measured detuned loading signal power, and calculates a difference between the microwave signal power and the detuned loading signal power. Subtractor 220 transmits a signal representative of the calculated difference (hereinafter referred to as a "power difference signal") to linearizer 222 (shown in Fig. 2). In the exemplary embodiment, an amplitude of the power difference signal is substantially proportional, such as inversely proportional or exponentially proportional, to a distance 230 defined between the object, such as shaft 104, (i.e., the object proximity) within electromagnetic field 224 and emitter 300.

In the exemplary embodiment, emitter 300 has a flat standing wave ratio. As such, when the resonant frequency shifts as a result of emitter 300 being detuned, the detuned loading signal remains substantially proportional or exponentially proportional to distance 230 (shown in Fig. 2) over the broad range of frequencies.

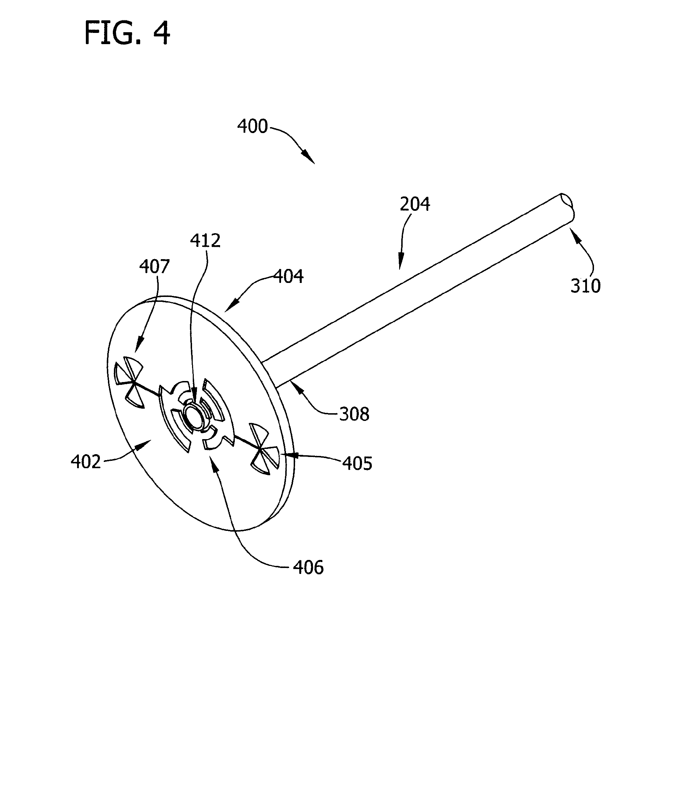

Fig. 4 is a perspective view of an emitter 400 that may be used with sensor assembly 110 (shown in Figs. 1 and 2). More specifically, emitter 400 is a specific type of broadband emitter that may be used as the broadband emitter 206 (shown in Fig. 2). In the exemplary embodiment, emitter 400 is a logarithmic periodic emitter 400 that has a broad frequency range defined by the shape and/or dimensions of emitter 400. More specifically, in the exemplary embodiment, emitter 400 may receive and/or transmit signals having frequencies between about 300 MHz to about 1600 MHz.

In the exemplary embodiment, emitter 400 is manufactured of a printed circuit board 401 and is formed with a substantially two-dimensional planar shape. More specifically, emitter 400 is formed with a substantially circular cross-sectional shape defined by a first surface 402 and a second surface 404. First surface 402 includes a conduit 406 that, in the exemplary embodiment, has a substantially non-linear shape having a first end 405 and a second end 407. A signal, such as the microwave signal, can be transmitted through conduit 406, and more specifically, transmitted to either the first end 405 or second end 407.

In the exemplary embodiment, conduit 406 is formed from a metallic wire. Alternatively, conduit 406 may be formed from any substance or compound that is sized and shaped to receive conduit 406 and that enables emitter 400 to function as described herein.

Emitter second surface 404 is coupled to signal processing device 200 (shown in Fig. 2) via data conduit 204. Specifically, data conduit 204 has a first end 308 and a second end 310. First end 308 is coupled to emitter second surface 404. More specifically, emitter second surface 404 includes a connecting device 412 that extends from second surface 404 to first surface 402. Data conduit 204 is coupled to second surface 404 via connecting device 412.

During operation, signal generator 218 (shown in Fig. 2) generates a microwave signal having a plurality of frequency components and transmits the microwave signal to directional coupling device 210 (shown in Fig. 2). Directional coupling device 210 (shown in Fig. 2) transmits the microwave signal to transmission power detector 212 and to emitter 300. As the microwave signal is transmitted through emitter 400, an electromagnetic field 224 (shown in Fig. 2) is emitted from emitter 400 and out of probe housing 208 (shown in Fig. 2). More specifically, the microwave signal is transmitted through conduit 406. If an object, such as a drive shaft 104 (shown in Fig. 1) or another component of machine 102 (shown in Fig. 1) and/or of power system 100 (shown in Fig. 1) enters and/or changes a relative position within electromagnetic field 224, an electromagnetic coupling may occur between the object and field 224. More specifically, because of the presence of the object within electromagnetic field 224 and/or because of such object movement, electromagnetic field 224 is disrupted because of an induction and/or capacitive effect within the object that may cause at least a portion of electromagnetic field 224 to be inductively and/or capacitively coupled to the object as an electrical current and/or charge. In such an instance, emitter 400 is detuned (i.e., a resonant frequency of emitter 206 is reduced and/or changed, etc.) and a loading is induced to emitter 400. The loading induced to emitter 400 causes a detuned loading signal to be transmitted through data conduit 204 (shown in Fig. 2) to directional coupling device 210. In the exemplary embodiment, the detuned loading signal has a lower power amplitude and/or a different phase than the power amplitude and/or the phase of the microwave signal. Moreover, in the exemplary embodiment, the power amplitude of the detuned loading signal is dependent upon the proximity of the object to emitter 400. Directional coupling device 210 transmits the detuned loading signal to reception power detector 214 (shown in Fig. 2).

Moreover, reception power detector 214 measures an amount of power contained in the distortion signal and transmits a signal representative of the measured detuned loading signal power to signal conditioning device 216 (shown in Fig. 2). Moreover, transmission power detector 212 detects an amount of power contained in the microwave signal and transmits a signal representative of the measured microwave signal power to signal conditioning device 216. In the exemplary embodiment, subtractor 220 (shown in Fig. 2) receives the measured microwave signal power and the measured detuned loading signal power, and calculates a difference between the microwave signal power and the detuned loading signal power. Subtractor 220 transmits a signal representative of the calculated difference (hereinafter referred to as a "power difference signal") to linearizer 222 (shown in Fig. 2). In the exemplary embodiment, an amplitude of the power difference signal is substantially proportional, such as inversely proportional or exponentially proportional, to a distance 230 defined between the object, such as shaft 104, (i.e., the object proximity) within electromagnetic field 224 and emitter 400.

In the exemplary embodiment, emitter 400 has a flat standing wave ratio. As such, when the resonant frequency shifts as a result of emitter 400 being detuned, the detuned loading signal remains substantially proportional or exponentially proportional to distance 230 (shown in Fig. 2) over the broad range of frequencies.

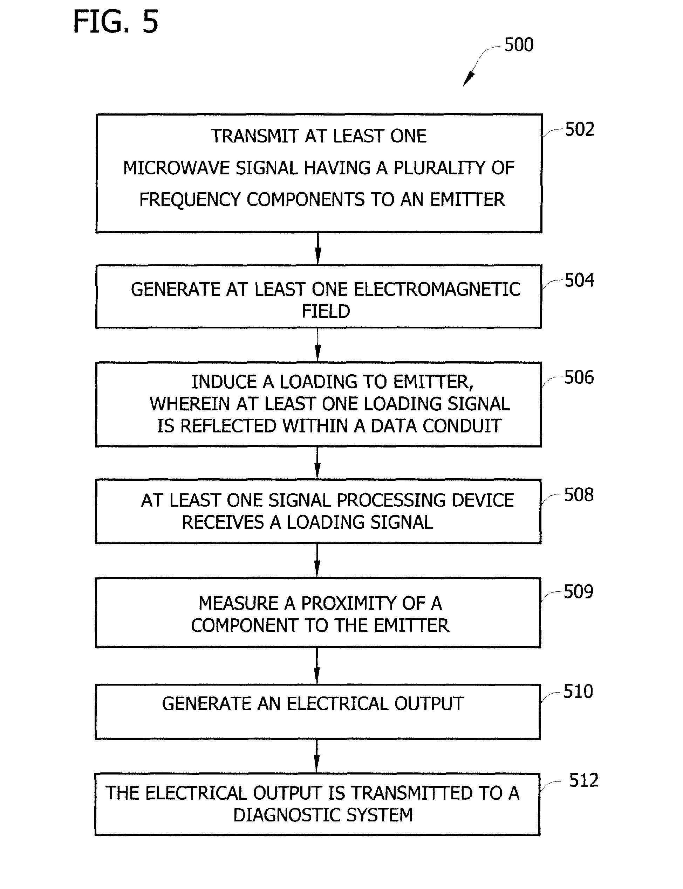

Fig. 5 is a flow chart illustrating an exemplary method 500 that may be used to measure a proximity of a component with respect to an emitter used with a power system, such as system 100 (shown in Fig. 1). In the exemplary embodiment, at least one microwave signal having a plurality of frequency components within a predefined frequency range is transmitted 502 to an emitter 206 (shown in Fig. 2). At least one electromagnetic field 224 (shown in Fig. 2) is generated 504 by emitter 206 from the microwave signal. A loading is induced 506 to emitter 206 by an interaction between a machine component, such as a drive shaft 104 (shown in Fig. 1) and electromagnetic field 224, wherein at least one detuned loading signal representative of the loading is reflected within a data conduit 204 (shown in Fig. 2) from emitter 206. The loading signal is received 508 by at least one signal processing device 200 (shown in Fig. 2).

Moreover, in the exemplary embodiment, signal processing device 200 measures 509 a proximity of shaft 104 to emitter 206 based on the detuned loading signal. Signal processing device 200 then generates 510 an electrical output. The electrical output is transmitted 512 to a diagnostic system 112 (shown in Fig. 1).

The above-described embodiments provide an efficient and substantially accurate sensor assembly that may be used for measuring the proximity of a component with respect to an emitter. In particular, the embodiments described herein provide a sensor assembly that performs proximity measurements using an emitter that operates over a wide range of frequencies. More specifically, such an emitter has a substantially flat standing wave ratio, which enables the emitter to have steady behavior patterns in the S-parameters of the emitter. As a result, even if the resonant frequency of the emitter shifts, the S-parameters of the emitter maintain a regular pattern that may be used for correlating to a relevant distance. As such, the sensor assembly herein is enabled to provide substantially accurate measurements.

Exemplary embodiments of a sensor assembly and a method for measuring a proximity of a machine component with respect to an emitter are described above in detail. The method and sensor assembly are not limited to the specific embodiments described herein, but rather, components of the sensor assembly and/or steps of the method may be utilized independently and separately from other components and/or steps described herein. For example, the sensor assembly may also be used in combination with other measuring systems and methods, and is not limited to practice with only the power system as described herein. Rather, the exemplary embodiment can be implemented and utilized in connection with many other measurement and/or monitoring applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A method for measuring a proximity of a component with respect to an emitter, said method comprising:
   transmitting at least one microwave signal having a plurality of frequency components within a predefined frequency range to the emitter;
   generating at least one electromagnetic field by the emitter from the at least one microwave signal;
   inducing a loading to the emitter by an interaction between the component and the at least one electromagnetic field, wherein at least one loading signal representative of the loading is reflected within a data conduit from the emitter;
   receiving the at least one loading signal by at least one signal processing device; and
   measuring the proximity of the component to the emitter by the at least one signal processing device based on the at least one loading signal.
2. A method in accordance with Clause 1, further comprising generating an electrical output by the at least one signal processing device.
3. A method in accordance with any preceding Clause, wherein said generating an electrical output by the at least one signal processing device further comprises generating an electrical output that is substantially proportional to a proximity measurement of the component.
4. A method in accordance with any preceding Clause, further comprising transmitting the electrical output to a diagnostic system.
5. A method in accordance with any preceding Clause, wherein said transmitting at least one microwave signal further comprises transmitting at least one microwave signal having a plurality of frequency components within a predefined frequency range to an emitter having a substantially two dimensional planar shape.
6. A method in accordance with any preceding Clause, wherein said transmitting at least one microwave signal further comprises transmitting at least one microwave signal having a plurality of frequency components within a predefined frequency range to a broadband emitter.
7. A method in accordance with any preceding Clause, wherein said transmitting at least one microwave signal to a broadband emitter further comprises transmitting at least one microwave signal having a plurality of frequency components within a predefined frequency range to at least one of a logarithmic spiral emitter and a logarithmic periodic emitter.
8. A sensor assembly comprising:
   at least one probe comprising an emitter that generates at least one electromagnetic field from at least one microwave signal comprising a plurality of frequency components within a predefined frequency range, wherein a loading is induced to said emitter when a component interacts with the at least one electromagnetic field;
   a data conduit coupled to said emitter, wherein at least one loading signal representative of the loading is reflected within said data conduit from said emitter; and
   at least one signal processing device configured to receive the at least one loading signal and to generate an electrical output.
9. A sensor assembly in accordance with any preceding Clause, wherein said at least one signal processing device is further configured to calculate a proximity of the component to said emitter based on the at least one loading signal.
10. A sensor assembly in accordance with any preceding Clause, wherein the electrical output is substantially proportional to a proximity measurement of the component.
11. A sensor assembly in accordance with any preceding Clause, wherein said emitter comprises a substantially two dimensional planar shape.
12. A sensor assembly in accordance with any preceding Clause, wherein said emitter is a broadband emitter.
13. A sensor assembly in accordance with any preceding Clause, wherein said broadband emitter is a logarithmic spiral emitter.
14. A sensor assembly in accordance with any preceding Clause, wherein said broadband emitter is a logarithmic periodic emitter.
15. A power system comprising:
   a machine comprising at least one component;
   at least one sensor assembly positioned proximate to said at least one component, wherein said at least one sensor assembly comprises:
      at least one probe comprising an emitter that generates at least one electromagnetic field from at least one microwave signal comprising a plurality of frequency components within a predefined frequency range, wherein a loading is induced to said emitter when said at least one component interacts with the at least one electromagnetic field;
      a data conduit coupled to said emitter, wherein at least one loading signal representative of the loading is reflected within said data conduit from said emitter; and
      at least one signal processing device configured to receive the at least one loading signal and to generate an electrical output; and
      a diagnostic system coupled to said at least one sensor assembly.
16. A power system in accordance with any preceding Clause, wherein said at least one signal processing device is further configured to calculate a proximity of said at least one component to said emitter based on the at least one loading signal.
17. A power system in accordance with any preceding Clause, wherein said emitter comprises a substantially two dimensional planar shape.
18. A power system in accordance with any preceding Clause, wherein said emitter is a broadband emitter.
19. A power system in accordance with any preceding Clause, wherein said broadband emitter is a logarithmic spiral emitter.
20. A power system in accordance with any preceding Clause, wherein said broadband emitter is a logarithmic periodic emitter.

## Claims

1. A sensor assembly (110) comprising:
at least one probe (202) comprising an emitter (206) that generates at least one electromagnetic field (224) from at least one microwave signal comprising a plurality of frequency components within a predefined frequency range, wherein a loading is induced to said emitter when a component (104) interacts with the at least one electromagnetic field;
a data conduit (204) coupled to said emitter, wherein at least one loading signal representative of the loading is reflected within said data conduit from said emitter; and
at least one signal processing device (200) configured to receive the at least one loading signal and to generate an electrical output.

2. A sensor assembly (110) in accordance with Claim 1, wherein said at least one signal processing device (200) is further configured to calculate a proximity of the component (104) to said emitter (206) based on the at least one loading signal.

3. A sensor assembly (110) in accordance with any preceding Claim, wherein the electrical output is substantially proportional to a proximity measurement of the component (104).

4. A sensor assembly (110) in accordance with any preceding Claim, wherein said emitter (206) comprises a substantially two dimensional planar shape.

5. A sensor assembly (110) in accordance with any preceding Claim, wherein said emitter (206) is a broadband emitter.

6. A sensor assembly (110) in accordance with Claim 5, wherein said broadband emitter is a logarithmic spiral emitter.

7. A sensor assembly (110) in accordance with Claim 5 or Claim 6, wherein said broadband emitter is a logarithmic periodic emitter.

8. A power system (100) comprising:
a machine (102) comprising at least one component (104);
at least one sensor assembly (110) positioned proximate to said at least one component, wherein said at least one sensor assembly comprises:
at least one probe (202) comprising an emitter (206) that generates at least one electromagnetic field (224) from at least one microwave signal comprising a plurality of frequency components within a predefined frequency range, wherein a loading is induced to said emitter when said at least one component interacts with the at least one electromagnetic field;
a data conduit (204) coupled to said emitter, wherein at least one loading signal representative of the loading is reflected within said data conduit from said emitter; and
at least one signal processing device (200) configured to receive the at least one loading signal and to generate an electrical output; and
a diagnostic system (112) coupled to said at least one sensor assembly.

9. A power system in accordance with Claim 8, wherein said at least one signal processing device (200) is further configured to calculate a proximity of said at least one component (104) to said emitter based on the at least one loading signal.

10. A power system in accordance with Claim 8 or Claim 9, wherein said emitter (206) comprises a substantially two dimensional planar shape.
